# EUROPEAN PATENT APPLICATION

(11) **EP 2 141 883 A1**
(43) Date of publication of application: **06.01.2010**
(21) Application number: 08305380.1
(22) Date of filing: 04.07.2008
(51) Int. Cl.: H04L 29/06

(54) **A method in a peer for authenticating the peer to an authenticator, corresponding device, and computer program product therefore**

(71) Applicant: Alcatel Lucent, 75008 Paris (FR)
(72) Inventor: Klotsche, Ralf, 75305 Neuenbürg (DE)
(74) Representative: Brose, Gerhard

(57) **Abstract**

The invention concerns a method in a peer (201) for authenticating the peer (201) to an authenticator (220), wherein the method comprises the steps of establishing (101) a network link to the authenticator (220), receiving (102) a challenge message from the authenticator (220) over the network link, the challenge message comprising a challenge value, calculating (104) a response value by applying a one-way function to at least the challenge value and a secret value, and sending (105) a response message to the authenticator (220) over the network link, the response message comprising the response value, wherein, in order to validate a computer-readable program (204) stored by the peer (201) for execution by the peer (201), the secret value is calculated (103) from the computer-readable program (204). The invention further concerns a device (201) and computer program product therefore.

## Description

The invention relates to a method in a peer for authenticating the peer to an authenticator according to the preamble of claim 1, a device according to the preamble of claim 6, and a computer program product according to the preamble of claim 9.

Information security is the protection of information and information systems from unauthorized access, use, disclosure, disruption, modification, or destruction. The primary goals of this branch of technology are the confidentiality, integrity and availability of information. When applied to computers, information security is sometimes called computer security. The objective of computer security varies and can include protection of information from theft or corruption, or the preservation of availability, as defined in a security policy.

Authentication is the act of establishing or confirming by a first party that claims made by or about a second party are true. In computer security, authentication is the process of attempting to verify the digital identity of a sender of a communication such as a request to log in. By logging in, also known as logging on, signing in, or signing on, is meant the act of identification of the sender to a system in order to obtain access. The sender being authenticated, often referred to as the principal, may be a person using a computer, a computer itself or a computer program.

Challenge-response authentication is a family of protocols in which an authenticator, commonly called verifier, presents a question and the principal, commonly called prover, must provide a valid answer to be authenticated. In this context, the question is known as a challenge and the answer is known as a response by those skilled in the art of computer security. The simplest example of a challenge-response protocol is password authentication, where the challenge is asking for the password and the valid response is the correct password. In this case, the password is also called a shared secret as it is only known to the parties involved in the secure communication.

Clearly an adversary that can eavesdrop on a password authentication can then authenticate itself in the same way. One known solution is to issue multiple passwords, each of them marked with an identifier. In this case, the entirety of passwords along with their respective identifiers may be considered to constitute the shared secret. The verifier can pick any of the identifiers, and the prover must have the correct password for that identifier. Assuming that the passwords are chosen independently, the adversary who intercepts one challenge-response message pair has no more chance of responding correctly to a different challenge than an adversary who has intercepted nothing. An example of such a challenge-response protocol is disclosed in United States Patent Application Publication No. US 2008/0028225 A1. Here, the prover is a peer node or peer, that is, a participant in a computer network.

While this known approach serves to verify the identity of the peer, one of its downsides is the inability to protect against manipulation of the peer by unauthorized parties. An object of the invention is thus to propose an improved approach to authentication that aims to establish the integrity of the peer in addition to its identity.

This object is achieved by a method according to the teaching of claim 1, a device according to the teaching of claim 6, and a computer program product according to the teaching of claim 9.

A main idea of the invention is to introduce into the response a dependency on a piece of software stored by the peer. Compared to a conventional challenge-response protocol, this approach bears the advantage of added security by allowing to detect a breach of integrity of the peer software. A further benefit lies in the cost effectiveness of the proposed solution as it does not impose the integration of additional hardware into the peer to provide for this added security. Finally, by verifying data integrity on the peer, an embodiment of the invention not only protects against deliberate tampering by an adversary, but potentially also against incidental data modification caused by software or hardware defects.

Further developments of the invention can be gathered from the dependent claims and the following description.

In the following the invention will be explained further making reference to the attached drawings.

To authenticate a peer to an authenticator according to an embodiment of the invention, a network link to the authenticator is established. Over the network link, a challenge message is received from the authenticator. This challenge message comprises a challenge value. In order to validate a computer-readable program stored by the peer for execution by the peer, a secret value is calculated from the computer-readable program. A response value is calculated by applying a one-way function to at least the challenge value and the secret value. Finally, a response message comprising this response value is sent to the authenticator over the network link.

Fig. 1 schematically shows a method for authenticating a peer to an authenticator according to an embodiment of the invention.

Fig. 2 shows a telecommunications network comprising a femtocell configured to perform the authentication method of Fig. 1.

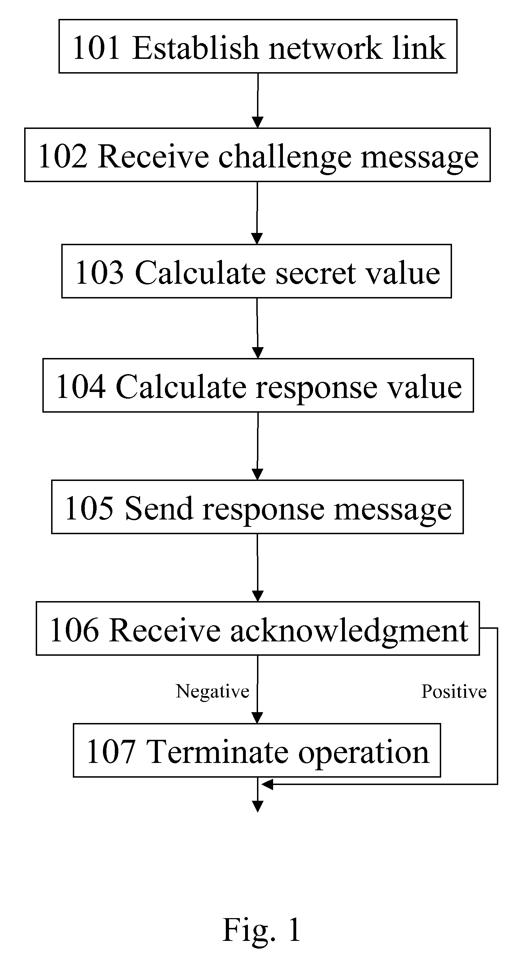

In the following, a method according to the invention is elucidated by way of example, referencing Fig. 1.

Fig. 1 shows seven consecutive steps 101 through 107. The steps 101 through 107 are connected by arrows to indicate a preferred sequence of their execution.

In the first step 101, the peer establishes a network link to the authenticator. In the given embodiment, the peer takes the form of a femtocell, also known as an access point base station, that is, a small cellular base station designed for use in residential or small business environments. By base station is meant a radio receiver and transmitter that serves as the hub of a local wireless network and may also be the gateway between a wired network and the wireless network. Here, the wireless network is a cellular network, i.e. a radio network made up of a number of radio cells each served by a fixed base station.

In the example at hand, the femtocell is a Universal Mobile Telecommunications System femtocell (Universal Mobile Telecommunications System = UMTS). It is understood that the concept may be applied to, inter alia, GSM, CDMA-2000, TD-SCDMA, and WiMAX femtocells without contravening the spirit of the invention. The authenticator takes the form of an access gateway, that is, a gateway between the telephony network and other networks such as the Internet. The femtocell connects to the access gateway by means of a digital subscriber line (DSL), a family of technologies that provide digital data transmission over the wires of a local telephone network. In this context, the telephone network is commonly referred to as a backhaul telecommunication network. Other broadband networks such as Ethernet provisioned over cable modem are common equivalents to DSL and may serve as backhaul networks in alternative embodiments of the invention.

In the second step 102, the femtocell receives a challenge message from the access gateway. This challenge message may have been generated by the access gateway in response to the establishment of the network link of the first step 101, or it may have been triggered by expiry of a regular interval. The challenge message comprises a challenge value of variable length or fixed length. To allow for a correlation between challenges and responses, the challenge message may comprise a unique identifier in addition to the actual challenge value.

It is understood that the backhaul network is considered an insecure communication channel. Consequently, to avoid the threat of a potential eavesdropper using an intercepted response, each challenge value should be unique. Each challenge value should also be unpredictable, least an attacker trick the femtocell into responding to a predicted future challenge, and then use the response to masquerade as that femtocell to the access gateway. To meet both requirements, the access gateway should preferably generate the challenge value randomly.

If the network connection established in the first step 101 is used in packet mode, the femtocell receives the challenge message in the form of one or more formatted blocks of data called packets. In addition to the actual challenge value, a packet may contain control information required by the backhaul network to deliver the challenge message from the access gateway to the femtocell.

In the third step 103, in order to validate a computer-readable program stored by the femtocell, the peer calculates a secret value from the computer-readable program. In the given embodiment, the computer-readable program is the femtocell's operating software. Being crucial to the femtocell's functionality, such software may be the subject of manipulation attempts, for example, to implement a backdoor mechanism for eavesdropping on UMTS subscribers. Depending on the hardware configuration of the femtocell, vulnerable programs to be validated may reside in a read-only memory (ROM), random-access memory (RAM), or flash memory as well as on an attached magnetic disk or other storage device.

In the embodiment of Fig. 1, the software to be validated is the same software that causes the femtocell to perform the steps 101 through 107 of Fig. 1, in which case the software effectively validates itself. In an alternative embodiment, the authentication software may be separate from the operating software to be validated, in which case integrity of the authentication software should be effected by other means.

The given embodiment employs a cryptographic hash function to calculate the secret value from the software. By a cryptographic hash function is meant a transformation that takes the software, having arbitrary length, as input and returns a fixed-size string called the hash value, digital fingerprint, checksum, or message digest. Being a concise representation of the software from which it was computed, this digest serves as the secret value for the purpose of the method according to Fig. 1. United States Patent No. 4,908,861 discloses an example of a cryptographic hash function with a digest of 128 binary digits (bits).

The cryptographic hash function is selected to make it computationally infeasible for an attacker to find a modified version of the software that incidentally matches the digest of the authentic version. Such selection ensures that the calculation of the secret value yields a deviating result when applied to a femtocell that has been corrupted or tampered with. Similarly, the cryptographic hash function is selected to ensure that it is computationally infeasible for an attacker to reen-gineer the software from any number of challenge and response pairs which may have been intercepted.

To calculate the secret value from the software in the third step 103, the embodiment of Fig. 1 uses the Message-Digest Algorithm 5 (MD5) as promoted by the Internet Engineering Task Force (IETF) in Request for Comments 1321. Alternative embodiments may make use of the Secure Hash Algorithm (SHA), as adopted by the United States of America as part of its Federal Information Processing Standard (FIPS), or other cryptographic hash functions without deviating from the spirit of the invention. In any case, the hash value for the algorithm chosen should be sufficiently long to provide protection against exhaustive search attacks on the secret value.

In a preferred embodiment of the invention, the secret value is known only to the femtocell and the access gateway, thus constituting a shared secret. This requirement implies that neither the shared value nor the operating software used for its computation be sent over an insecure communication channel such as the network link of the first step 101.

In the fourth step 104, the peer calculates a response value by applying a one-way function to the challenge value and the secret value. By a one-way function is meant a function that is feasible to compute but computationally infeasible to invert. In the given embodiment, the one-way function is defined by the MD5 algorithm which is also used in the third step 103, and is applied to a concatenation of the identifier, the secret value, and the challenge value. The use of a hash function as the one-way function bears the additional advantage of yielding a response value of fixed size, which is 128 bits in the case of MD5.

An alternative embodiment of the invention may make use of a one-way compression function to achieve the same benefit. By one-way compression function is meant a one-way function that transforms two fixed-length inputs to an output of the same size as one of the inputs. If the secret value and the challenge value are each of fixed length, the one-way compression function may be applied to these two values and yields a fixed-length response value. Still other embodiments may employ one-way functions based on integer factorization, the Rabin function, or discrete logarithms in a finite field.

In the fifth step 105, the femtocell sends a response message to the access gateway over the network link, the response message comprising the response value. To allow the access gateway to correlate the response with the request to which it refers, the response message also comprises the unique identifier received in the second step 102 as part of the request message. If the access gateway shares the secret value of the femtocell and if it has stored the challenge value received by the femtocell in the second step 102, it may also perform the computation of the fourth step 104 and compare its result to the response value provided by the femtocell.

In the sixth step 106, the femtocell receives an acknowledgment from the access gateway over the network link. This acknowledgment signals to the femtocell whether the response message sent in the fifth step 105 was found by the access gateway to be valid. The validity of the response message indicated by a positive acknowledgment from the access gateway is taken by the femtocell as proof of the integrity of its operating software.

In the seventh step 107, if the acknowledgment received by the femtocell in the sixth step 106 is found to be negative, the femtocell terminates its operation. In this case, an illegitimate manipulation of the femtocell's operating software must be assumed, and regular processing is aborted to inhibit an adversary from exploiting the resulting vulnerability.

In a preferred embodiment, the steps 101 through 107 of the method of Fig. 1 are implemented in software and wholly or partially executed by a secure cryptoprocessor. By a secure cryptoprocessor is meant a dedicated computer or microprocessor for carrying out cryptographic operations, embedded in a packaging with multiple physical security measures, which give it a degree of tamper resistance. The cryptoprocessor inputs program instructions in encrypted form and decrypts these instructions to plain instructions which are then executed within the same cryptoprocessor chip where the decrypted instructions are inaccessibly stored. By never revealing the decrypted program instructions, the cryptoprocessor prevents tampering of the authentication software by attackers who may have legitimate access to the sub-system data bus. This technique, which is known as bus encryption by those skilled in the art of computer security, ensures that the method of Fig. 1 cannot be circumvented by individuals with access to the physical hardware hosting the femtocell.

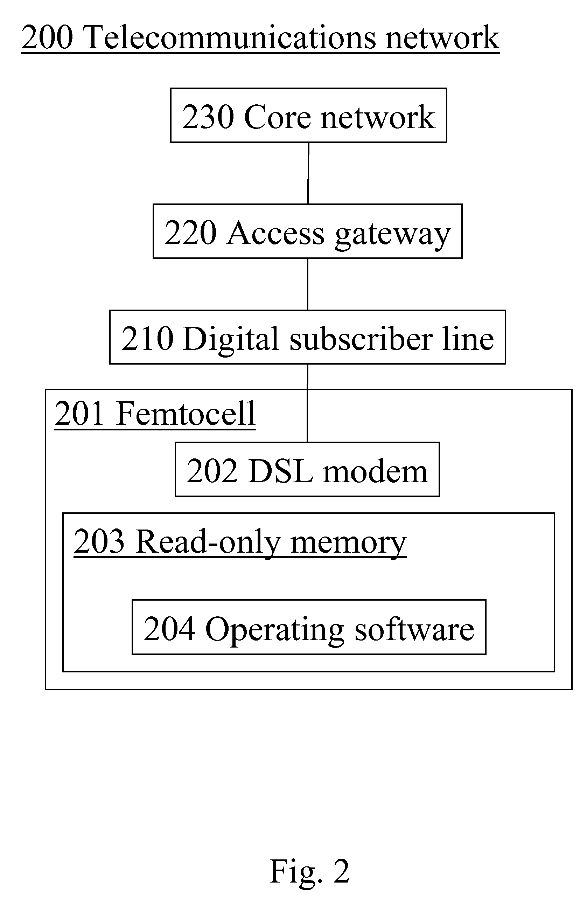

Fig. 2 shows a telecommunications network 200 comprising a femtocell 201, the femtocell 201 in turn comprising a DSL modem 202 and a ROM 203 containing an operating software 204. In addition to the femtocell 201, Fig. 2 shows a DSL 210, access gateway 220, and core network 230.

Fig. 2 further shows mutual connections between: the DSL modem 202 and the DSL 210; the DSL 210 and the access gateway 220; and the access gateway 220 and the core network 230.

The core network 230 is the central part of the telecommunications network 200 that provides various services to customers. The access gateway 220 connects the femtocell 201, which is configured to perform the authentication method of Fig. 1, to the core network 230 for backhaul via the DSL 202. For this purpose, the femtocell 201 comprises the DSL modem 202, also known as a DSL transceiver, typically hooked to a telephone line. In the case that the upstream and downstream data flows differ in volume, i.e. are asymmetric, the DSL modem 202 may also be called an ADSL Terminal Unit Remote (ATU-R). The ROM 203 stores the operating software 204 for operating the femtocell 201. The femtocell 201, being located on the customer's premises (not depicted), is out of physical range of the telecommunications service provider and vulnerable to tampering by adversaries. Hence, the femtocell 201 is configured to perform the steps 101 through 107 depicted in Fig. 1 to ensure integrity of the operating software 204.

## Claims

1. A method in a peer (201) for authenticating the peer (201) to an authenticator (220), the method comprising the steps of
establishing (101) a network link to the authenticator (220),
receiving (102) a challenge message from the authenticator (220) over the network link, the challenge message comprising a challenge value,
calculating (104) a response value by applying a one-way function to at least the challenge value and a secret value, and
sending (105) a response message to the authenticator (220) over the network link, the response message comprising the response value,
**characterized in that**, in order to validate a computer-readable program (204) stored by the peer (201) for execution by the peer (201), the secret value is calculated (103) from the computer-readable program (204).

2. A method according to claim 1, **characterized in that**, in order to calculate (103) the secret value from the computer-readable program (204), the method comprises the step of
computing a message digest by applying a cryptographic hash function to the computer-readable program (204).

3. A method according to claim 1, **characterized in that** the method further comprises the step of,
upon sending (105) the response message, receiving (106) an acknowledgment from the authenticator (220) over the network link, the acknowledgment indicating a validity of the response message.

4. A method according to claim 3, **characterized in that** the method further comprises the step of,
in response to receiving a negative acknowledgment from the authenticator (220) over the network link, terminating (107) operation of the peer (201).

5. A method according to claim 1, **characterized in that**, in order to establish (101) the network link, the method comprises the step of
connecting the peer (201) to the authenticator (220) over a backhaul telecommunication network (210), wherein the peer is a base station (201), and the authenticator is an access gateway (220).

6. A peer device (201), the device (201) comprising
means (202) for establishing a network link to an authenticator (220),
means for receiving a challenge message from the authenticator over the network link, the challenge message comprising a challenge value,
means for calculating a response value by applying a one-way function to the challenge value and a secret value,
means for sending a response message to the authenticator (220) over the network link, the response message comprising the response value, and
means (203) for storing a computer-readable program (204),
**characterized in that** the peer device (201) further comprises
means for calculating the secret value from the computer-readable program.

7. A peer device according to claim 6, **characterized in that** the peer device is an access point base station (201), the means for establishing a network link comprises a broadband network interface (202), and the means for storing the computer-readable program (204) comprises at least one of the following:
a read-only memory (203),
a random access memory,
a flash memory, and
a magnetic disk attached to the access point base station.

8. A peer device according to claim 6, **characterized in that** the peer device (201) further comprises a secure cryptoprocessor.

9. A computer program product comprising a computer-usable medium including a computer-readable program, wherein the computer-readable program when executed on a computer causes the computer to
establish a network link to an authenticator (220),
receive a challenge message from the authenticator (220) over the network link, the challenge message comprising a challenge value,
calculate a response value by applying a one-way function to the challenge value and a secret value, and
send a response message to the authenticator (220) over the network link, the response message comprising the response value,
**characterized in that**, in order to validate a further computer-readable program (204) stored by the peer (201) for execution by the peer (201), the computer-readable program when executed on the computer further causes the computer to
calculate the secret value from the further computer-readable program (204).

10. A computer program product according to claim 9, **characterized in that** the computer-readable program and the further computer-readable program (204) are the same program.
